**Europäisches Patentamt**

**European Patent Office**

**Office européen des brevets**

(19)

(11) Veröffentlichungsnummer: **0 117 379**
**A1**

# EUROPÄISCHE PATENTANMELDUNG

(21) Anmeldenummer: **83810624.3**

(22) Anmeldetag: **28.12.83**

(51) Int. Cl.³: **G 06 K 13/08**

(30) Priorität: **04.01.83  CH 30/83**

(43) Veröffentlichungstag der Anmeldung: **05.09.84**
Patentblatt **84/36**

(84) Benannte Vertragsstaaten: **DE FR GB NL**

(71) Anmelder: **FELLER AG., Bergstrasse, CH-8810 Horgen
(CH)**

(72) Erfinder: **Anderegg, Max, Im Brünneli 27, CH-8127 Forch
(CH)**
Erfinder: **Rütimann, Kurt, In der Deisten 17,
CH-8125 Zollikerberg (CH)**

(74) Vertreter: **Haffter, Tobias Fred, Dr. Dipl.-Phys. et al,
PATENTANWALTS-BUREAU ISLER AG
Postfach 6940 Walchestrasse 23, CH-8023 Zürich (CH)**

(54) **Verfahren und Vorrichtung zur Blattförderung bei einer automatischen Leseeinrichtung.**

(57) Von einem Stapel (2) wird ein abzulesendes Blatt abgezogen, durch ein erstes Vorschubwalzenpaar (11a, 11b) über eine photoelektrische Leseeinrichtung (3) geführt und durch ein zweites Vorschubwalzenpaar (21a, 21b) teilweise in einen nahezu auf die sich vom Stapel (2) erstreckende, ebene Transportbahn ausgerichteten ersten Sammelbehälter (23, 24) für erfolgreich abgelesene Blätter befördert. Benachbart zum ersten Sammelbehälter (23, 24) und quer zur Transportbahn ist ein zweiter Sammelbehälter (25, 26) für erfolglos abgelesene Blätter angeordnet. Ein umsteuerbares Vorschubwalzenpaar (29a, 29b) ist zwischen dem ersten und zweiten Sammelbehälter (23, 24; 25, 26) angeordnet, erfaßt das zugeführte Blatt (32) und fördert dieses nach Vorliegen des einen Gutbefund oder Nichtgutbefund enthaltenden Ableseergebnisses der Leseeinrichtung (3) vollständig in den ersten oder zweiten Sammelbehälter (23, 24; 25, 26). Die geradlinigen, in einer einzigen Ebene liegenden Transportwege ermöglichen eine kompakte Ausbildung und eine rasche Folge der abzulesenden und entsprechend dem Ableseergebnis getrennt zu sammelnden Blätter.

- 1 -

Verfahren und Vorrichtung zur Blattförderung bei einer
automatischen Leseeinrichtung

Die Erfindung bezieht sich auf ein Verfahren zur Blattförderung bei einer automatischen Leseeinrichtung gemäss dem Oberbegriff des Patentanspruches 1 sowie auf eine Vorrichtung zur Ausführung des Verfahrens.

Ein Verfahren dieser Art und eine Vorrichtung zu seiner Ausführung sind aus der DE-PS 27 34 371 bekannt. Die bekannte Vorrichtung und das ihr zugrunde liegende Verfahren bezwecken das getrennte Sammeln von erfolgreich und erfolglos abgelesenen Blättern und vermeiden den Nachteil, dass für die abgelesenen Blätter bis zum Vorliegen des Gutbefundes bzw. Nicht-Gutbefundes des Ableseergebnisses ein zusätzlicher Stauraum vorzusehen ist.

Bei der genannten bekannten Vorrichtung ist zwischen einem am Ausgang der Lesestelle befindlichen Vorschubwalzenpaar und einem vor dem ersten Sammelraum angeordneten umsteuerbaren Vorschubwalzenpaar eine erste Blattführung angeordnet. Zwischen dem umsteuerbaren Vorschubwalzenpaar und dem zweiten Sammelraum sind eine zweite Blattführung, welche mit der ersten Blattührung einen spitzen Winkel nach Art einer Weiche bildet, und ein weiteres Vorschubwalzenpaar angeordnet. Die Drehrichtung des umsteuerbaren Vorschubwalzenpaares wird in Abhängigkeit vom Gutbefund bzw. Nicht-Gutbefund des Ableseergebnisses der Lesestelle derart gesteuert, dass ein die Lesestelle verlassendes Blatt, das mittels des erstgenannten Vorschubwalzenpaares über die erste Blattführung zum umsteuerbaren Vorschubwalzenpaar gelangt, aufgrund der einen Drehrichtung des umsteuerbaren Vorschubwalzenpaares teilweise in den ersten Sammelraum gefördert wird, bis seine hintere Kante in der durch die erste und zweite Blattführung gebildeten Spitze liegt. Bei Gutbefund wird das Blatt hierauf mittels der gleichen Drehrichtung des umsteuerbaren Vorschubwalzenpaares vollständig in den ersten Sammelraum geschoben. Bei Nicht-Gutbefund wird das Blatt mittels der entgegengesetzten Drehrichtung des umsteuerbaren Vorschubwalzenpaares wieder aus dem ersten Sammelraum, in welchem es sich teilweise befindet, herausgezogen. Bei dieser entgegengesetzten Vorschubbewegung gelangt ein Blatt mit seiner vorgängig ausserhalb des ersten Sammelraumes gebliebenen Blattkante über die erwähnte Blattführungsspitze automatisch in die zweite Blattführung und mittels des weiteren Vorschubwalzenpaares in den zweiten Sammelraum.

Die bekannte Vorrichtung, bei der die Reihenfolge der Blätter in beiden Sammelräumen unverändert bleibt, ist zwar kompakt, weil der erste Sammelraum als vorübergehender Stauraum dient, und benötigt einen relativ einfachen Antriebsmechanismus, da lediglich ein einziges Vorschubwalzenpaar bezüglich seiner Drehrichtung umsteuerbar sein muss. Nachteilig ist jedoch, dass exakte, gebogene Blattführungen mit zugehörigen Vorschubwalzenpaaren erforderlich sind, und dass eine Anordnung in einer einzigen, vorzugsweise horizontalen Förderebene nicht möglich ist, weil zufolge der spitzkehrenartigen Zuordnung der beiden erwähnten Blattführungen mindestens einer der beiden Sammelräume ausserhalb der die Leseeinrichtung enthaltenden Förderebene liegen muss.

Aufgabe der vorliegenden Erfindung ist, ein Verfahren und eine Vorrichtung zur Blattförderung der eingangs genannten Art zu schaffen, welche bei minimaler Platzbeanspruchung nur geradlinige, in einer einzigen Ebene liegende Transportwege enthalten und mit welchen eine raschere Folge der abzulesenden und zu sammelnden Blätter ermöglicht wird.

Erfindungsgemäss weist zur Lösung dieser Aufgabe das Verfahren die im kennzeichnenden Teil des Patentanspruches 1 angeführten Merkmale auf. Die Vorrichtung zur Ausführung dieses Verfahrens ist im Patentanspruch 2 gekennzeichnet.

Die Erfindung ermöglicht es, die Blattfördervorrichtung einschliesslich der Leseeinrichtung tischförmig auszubilden, wobei zufolge der vorübergehend teilweisen Einführung jedes abgelesenen Blattes in den ersten Sammelraum für erfolgreich abgelesene Blätter ein diesen Sammelraum bildender Behälter grösstenteils in den Tisch integriert werden kann, und wobei nur ein weiterer, den zweiten Sammelraum für erfolglos abgelesene Blätter bildende Behälter seitlich am Tisch angebracht werden muss, beispielsweise an dessen der Bedienungsseite gegenüberliegenden Rückseite des Tisches. Dadurch verkürzen sich auch die Transportstrecke und die Transportzeit für normalerweise erfolgreich abgelesene Blätter in den entsprechenden Behälter.

Ausführungsbeispiele der Erfindungsgegenstände werden nachstehend anhand der Zeichnungen erläutert. Es zeigen :

Fig. 1 einen Grundriss einer Anlage mit der vorliegenden Vorrichtung zur Blattförderung und einer Leseeinrichtung,

Fig. 2 einen Aufriss längs der Linie II-II in Fig. 1,

Fig. 3 einen Seitenriss längs der Linie III-III in Fig. 2,

Fig. 4 ein zeitliches Antriebsdiagramm für die walzenförmigen Vorschuborgane der Fig. 1 bis 3.

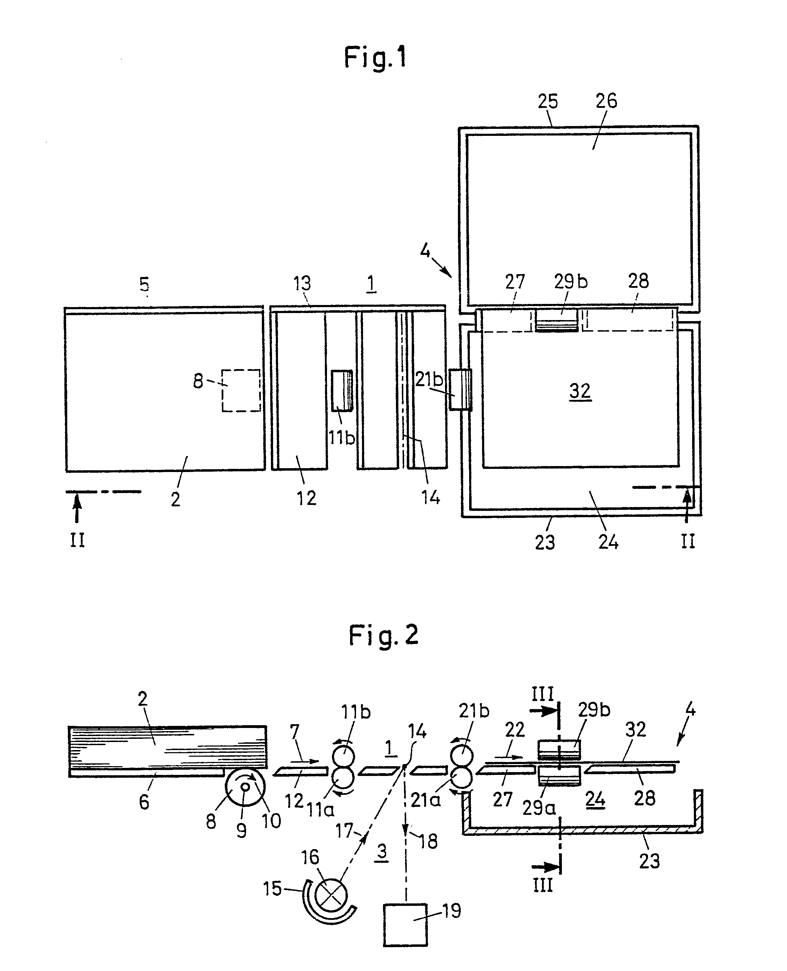

Gemäss Fig. 1 und 2 enthält die dargestellte Anlage eine gemäss der vorliegenden Erfindung ausgebildete Vorrichtung 1 zur Förderung einzelner Blätter oder Belege von einem Stapel 2 zu einer Leseeinrichtung 3 und von dieser zu einer Sammeleinrichtung 4. Der Blatt- oder Belegstapel 2 befindet sich in einem Behälter 5, der mit einer unteren Führungsplatte 6 versehen ist. Um Blätter einzeln an der Unterseite des Stapels 2 abziehen zu können, ist unterhalb des über die Führungsplatte 6 in der Fördervorrichtung 7 vorstehenden Randbereichs des
Stapels 2 eine Abzugswalze 8 angeordnet, welche um ihre
Achse 9 in der Drehrichtung 10 drehend intervallweise
angetrieben ist.

Jedes einzeln abgezogene Blatt wird erst durch
die Abzugswalze 8 und dann durch ein erstes angetriebenes Vorschubwalzenpaar 11a, 11b in der Förderrichtung 7
auf einer mehrteiligen Blattführungseinrichtung 12 bewegt, welche mit einer Bezugskante 13 (Fig. 1) versehen
ist. Damit das geförderte Blatt immer an der Bezugskante
13 anliegt, können die Drehachsen des Vorschubwalzenpaares 11a, 11b mit der Bezugskante 13 einen geringfügig
von 90° abweichenden Winkel bilden.

In der Förderrichtung 7 nach dem Vorschubwalzenpaar 11a, 11b ist in der Blattführungseinrichtung 12
eine schlitzförmige Lesestelle 14 für das über diese
gleitende Blatt vorgesehen, welche zur Leseeinrichtung 3
gehört. Um das über die Lesestelle 14 gleitende Blatt zu
lesen, enthält die Leseeinrichtung 3 in bekannter Weise
eine mit einem Reflektor 15 versehene Lichtquelle 16,
beispielsweise eine Halogenlampe, deren Licht in der
Beleuchtungsrichtung 17 auf das über der Spaltförmigen
Lesestelle 14 befindliche Blatt geworfen wird. Vom beleuchteten Blatt gelangt reflektiertes Licht in der Lichtbündelrichtung 18 zu einer photoelektrischen Aufnahmeeinrichtung 19, welche in hier nicht zu erläuternder Weise die auf dem Blatt befindlichen Zeichen erkennt und entsprechende Signale einer nicht dargestellten Auswerteeinrichtung zuführt. Diese Auswerteeinrichtung erzeugt insbesondere auch ein Signal, welches anzeigt, ob das Ableseergebnis erfolgreich (Gutbefund) oder erfolglos (Nicht-Gutbefund) war.

Am Ende der Blattführungseinrichtung 12 bzw. am Eingang der Sammeleinrichtung ist ein zweites angetriebenes Vorschubwalzenpaar 21a, 21b angeordnet, das jedes von der Leseeinrichtung 3 abgelesene Blatt in der Richtung 22 in die Sammeleinrichtung 4 fördert. Sowohl beim ersten Vorschubwalzenpaar 11a, 11b als auch beim zweiten Vorschubwalzenpaar 21a, 21b ist jeweils die untere Vorschubwalze 11a bzw. 21a in der Pfeilrichtung angetrieben, während die obere Vorschubwalze 11b bzw. 21b mitläuft.

Die Sammeleinrichtung 4 enthält einen ersten Behälter 23 mit einem Sammelraum 24 für erfolgreich abgelesene Blätter und einen zweiten Behälter 25 mit einem Sammelraum 26 für erfolglos abgelesene Blätter. Die beiden Behälter 23, 25 sind quer zur Förderrichtung 22 unmittelbar nebeneinander angeordnet, und zwar derart, dass der Behälter 23 für erfolgreich abgelesene Blätter gegenüber der Blattführungseinrichtung 12 nur um eine kleine Distanz in Richtung zur Vorderseite der dargestellten Anlage, d.h. nach unten in Fig. 1, verschoben ist bzw. der Behälter 25 für erfolglos abgelesene Blätter mit praktisch seiner ganzen Breite auf der Hinterseite der Anlage gegenüber der Blattführungseinrichtung 12 vorsteht. Ueber den Rändern der nebeneinanderliegenden Seitenwände der Behälter 23 und 25 ist eine weitere Blattführungseinrichtung, bestehend aus zwei Teilen 27 und 28, die in einem Längsabstand voneinander angeordnet sind und deren als Auflageflächen für die geförderten Blätter dienenden Oberseiten in der Ebene der Oberseiten der vorangehenden Blattführungseinrichtung 12 liegen, vorgesehen.

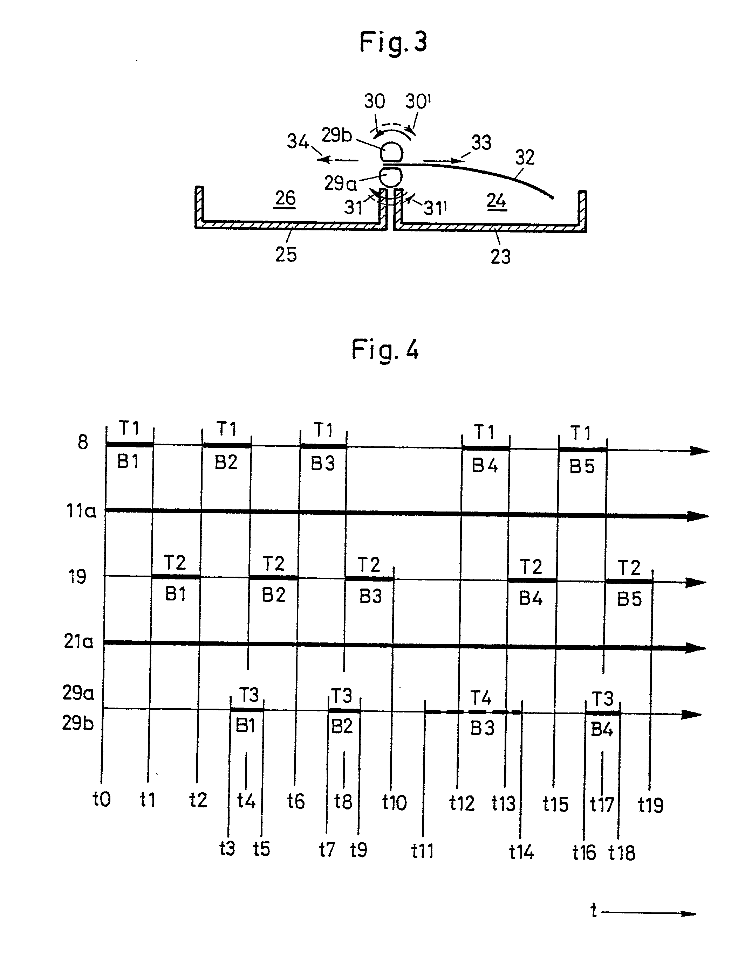

Im Zwischenraum zwischen den beiden Blattführungsteilen 27, 28 ist ein weiteres Vorschubwalzenpaar 29a, 29b angeordnet, dessen Vorschubwalzen 29a und 29b beide mit entgegengesetzten Drehrichtungen intervallweise angetrieben sind, wobei der Antrieb umsteuerbar ist, um die jeweiligen Drehrichtungen umzukehren. In Fig. 3 ist durch Pfeile angedeutet, dass die Vorschubwalzen 29a, 29b im einen Fall in den Drehrichtungen 30, 31 und im anderen Fall in den Drehrichtungen 30', 31' angetrieben sind. Die Achsen der Vorschubwalzen 29a, 29b stehen hierbei zu den Achsen der vorangehenden Vorschubwalzenpaare 11a, 11b und 21a, 21b mindestens angenähert senkrecht. Ein sich zwischen den Walzen 29a, 29b befindliches Blatt 32 wird demnach bei den Drehrichtungen 30, 31 der Vorschubwalzen 29a, 29b in den Sammelraum 24 des Behälters 23 geschoben und bei den entgegengesetzten Drehrichtungen 30', 31' in den Sammelraum 26 des Behälters 25, wie dies in Fig. 3 durch entsprechende Richtungspfeile 33 bzw. 34 angedeutet ist.

Wie aus Fig. 3 ersichtlich ist, sind die Vorschubwalzen 29a, 29b nicht vollständig zylindrisch, sondern mit einer ebenen Fläche versehen, welche sich über die ganze Walzenlänge erstreckt. In der Ruhelage des Vorschubwalzenpaares 29a, 29b stehen sich die ebenen Flächen einander gegenüber, wie dies in Fig. 3 dargestellt ist. Dadurch befindet sich in der Ruhelage der Vorschubwalzen 29a, 29b zwischen diesen beiden ein spaltförmiger Zwischenraum, in welchen das jeweils vom Vorschubwalzenpaar 21a, 21b geförderte Blatt 32 mit seinem einen Randbereich geschoben wird, vergl. Fig. 1 bis 3.

Werden nun die Vorschubwalzen 29a, 29b in den Drehrichtungen 30 bzw. 31 (Fig. 3) in Drehbewegung versetzt, so schieben die zylindrischen Flächen der Vorschubwalzen 29a, 29b das Blatt 32 in den Sammelraum 24 des Behälters 23, wozu nur wenige Umdrehungen der Vorschubwalzen 29a, 29b erforderlich sind, da sich das Blatt 32 grösstenteils bereits im Sammelraum 24 befindet. Bei einer entgegengesetzten Drehbewegung der Vorschubwalzen 29a, 29b in den Drehrichtungen 30' bzw. 31' wird ebenfalls durch die zylindrischen Flächen der Vorschubwalzen 29a, 29b, das Blatt 32 aus dem Sammelraum 24 des Behälters 23 gezogen und gleichzeitig in den Sammelraum 26 des Behälters 25 geschoben, wie dies bereits erwähnt worden ist. Hierzu ist eine grössere Anzahl von Umdrehungen der Vorschubwalzen 29a, 29b erforderlich. Dass diese Förderung des Blattes 32 in den Richtungen 33 und 34 wegen der ebenen Flächen der Vorschubwalzen 29a, 29b mit kurzen Unterbrüchen, also sozusagen ruckweise erfolgt, ist ohne Belang.

Anhand des in Fig. 4 dargestellten zeitlichen Antriebsdiagrmmes wird nun die Steuerung der Antriebe der Abzugswalze 8 und des Vorschubwalzenpaares 11a, 11b, des Vorschubwalzenpaares 21a, 21b und des umsteuerbaren Vorschubwalzenpaares 29a, 29b sowie auch die Steuerung der photoelektrischen Aufnahmeeinrichtung 19 erläutert. Eine hierzu vorgesehene Steuereinrichtung wie auch die gesteuerten elektrischen Antriebe für die Walzen 8, 11a, 21a, 29a, 29b sind in den Figuren nicht dargestellt.

In der Fig. 4 sind in Abhängigkeit von der Zeit t die Einschaltintervalle mit dicken horizontalen Linien dargestellt, wobei für die Vorschubwalzen 29a, 29b eine ausgezogene Linie sich auf eine Drehbewegung in der Drehrichtung 33 (Einschieben des Blattes 32 in den Sammelraum 24) und eine gestrichelte Linie sich auf eine Drehbewegung in der Drehrichtung 34 (Einschieben des Blattes 32 in den Sammelraum 26) beziehen. Mit t0 bis t19 sind jeweilige Ein- bzw. Ausschaltzeitpunkte bezeichnet. Mit T1 sind die Einschaltintervalle des Antriebes der Abzugswalze 8 bezeichnet, mit T2 die Einschalt- oder Funktionsintervalle der photoelektrischen Aufnahmeeinrichtung 19, mit T3 die Einschaltintervalle des Antriebes der Vorschubwalzen 29a, 29b in den Drehrichtungen 30, 31 (Fig. 3) und mit T4 ein Einschaltintervall des Antriebes der Vorschubwalzen 29a, 29b in den entgegengesetzten Drehrichtungen 30', 31'. Mit B1 bis B5 sind aufeinanderfolgende Blätter des Stapels 2 (Fig. 2) bezeichnet, die in den angegebenen Zeitintervallen von den jeweiligen Vorschubwalzenpaaren bzw. der Abzugswalze 8 gefördert werden.

Aus Fig. 4 ist ersichtlich, dass der Antrieb der Vorschubwalzen 11a und 21a, welche in bereits erwähnter Weise die zugehörigen Vorschubwalzen 11b bzw. 21b mitlaufen lassen, dauernd eingeschaltet ist und somit durch einen einzigen Motor erfolgen kann, womit ein Gleichlauf der Walzenpaare 11a, 11b und 21a, 21b gewährleistet ist. Durch den gleichen Motor kann auch der Antrieb der Abzugswalze 8 erfolgen, wobei zur Ein- und Ausschaltung des Antriebes eine elektrisch steuerbare Kupplung zwischen dem Motor und der Abzugswalze vorgesehen werden kann. Dagegen wird für den Antrieb der Vorschubwalzen 29a, 29b mit Vorteil ein eigener, umsteuerbarer Motor vorgesehen.

Gemäss Fig. 4 wird ein erstes Blatt B1 während des Intervalles T1 durch die Abzugswalze 8 von der Unterseite des Stapels 2 abgezogen. Die weitere Förderung des Blattes B1 in der Förderrichtung 7 (Fig. 2) zur Lesestelle 14 erfolgt durch das ständig drehende Vorschubwalzenpaar 11a, 11b. Im Zeitpunkt t1, d.h. im Zeitpunkt des Abschaltens des Antriebes der Abzugswalze 8, erfolgt die Einschaltung der photoelektrischen Aufnahmeeinrichtung 19, die während eines Intervalles T2 bis zum Zeitpunkt t2 aktiv bleibt, während welchem Intervall das Blatt B1 über die Lesestelle 14 läuft. Das Blatt B1 wird hierauf vom ständig drehenden Vorschubwalzenpaar 21a, 21b erfasst und mit seinem der Anschlagkante 13 benachbarten Randbereich zwischen die Vorschubwalzen 29a, 29b geschoben, so dass es teilweise bzw. grösstenteils über dem Sammelraum 24 des Behälters 23 liegt.

Im Zeitpunkt t2 des Ausschaltens der photoelektrischen Aufnahmeeinrichtung 19 liegt auch das Ableseergebnis der erwähnten, der Aufnahmeeinrichtung zugeordneten Auswerteeinrichtung vor. Enthält das Ableseergebnis einen Gutbefund, d.h. ist das Blatt B1 erfolgreich abgelesen worden, was der Normalfall ist, so wird im gleichen Zeitpunkt t2 durch ein entsprechendes Signal die Abzugswalze 8 erneut in Gang gesetzt, um ein weiteres Blatt B2 vom Stapel 2 abzuziehen, welches dann entsprechend der Lesestelle 14 der im Zeitpunkt t4 eingeschalteten photoelektrischen Aufnahmeeinrichtung 19 zugeführt wird. Im Zeitintervall zwischen dem erneuten Einschalten der Abzugswalze 8 (Zeitpunkt t2) und dem nachfolgenden Ausschalten der Aufnahmeeinrichtung 19 (Zeitpunkt t6), d.h. in einem Zeitpunkt t3, in welchem das Blatt B1 durch das Vorschubwalzenpaar 21a, 21b mit der ständig angetriebenen Walze 21a mit Sicherheit in den spaltförmigen Zwischenraum zwischen die Walzen des umsteuerbaren Vorschubwalzenpaares 29a, 29b geschoben worden ist, wird dieses Walzenpaar in den Drehrichtungen 30 bzw. 31 (Fig. 3) durch den zugeordneten Antrieb in Bewegung gesetzt, so dass das Blatt B1 vollständig in den Sammelraum 24 des Behälters 23 gelangt. Die Einschaltzeit T3 des Antriebes der Vorschubwalzen 29a, 29b ist dabei, wie in Fig. 4 dargestellt, verhältnismässig kurz, da sich ja das Blatt B1 bzw. das Blatt 32 in Fig. 3 bereits nahezu ganz in diesem Sammelraum befindet. Demnach ist dieser Fördervorgang in einem Zeitpunkt t5 beendet, der zeitlich ausreichend vor dem Zeitpunkt liegt, in welchem das nächste Blatt B2 nach dem Passieren der Lesestelle 14 zwischen die Vorschubwalzen 29a, 29b geschoben wird, d.h. ungefähr vor dem Zeitpunkt t6 in Fig. 4.

Die angeführten Abzug- und Fördervorgänge wiederholen sich demnach für die weiteren Blätter, wie dies in Fig. 4 durch die Zeitpunkte t7 , t8 , t9 und t10 dargestellt ist, so lange das Ableseergebnis einen Gutbefund liefert, d.h. so lange das jeweilige Blatt erfolgreich abgelesen wurde. Enthält das Ableseergebnis jedoch
einen Nicht-Gutbefund, d.h. wurde das betreffende Blatt
erfolglos abgelesen, was in Fig. 4 für den Zeitpunkt t10
angenommen ist, so wird die Abzugswalze 8 zur Entnahme
des folgenden Blattes B4 vom Stapel 2 nicht, wie vorgängig, im gleichen Zeitpunkt eingeschaltet, sondern
mit einer bestimmten Verzögerung in einem späteren Zeitpunkt t12. Diese Massnahme ist deshalb getroffen, weil
im Zeitintervall zwischen dem Einschieben des erfolglos abgelesenen Blattes B3 (etwa Zeitpunkt t10 ) zwischen die Vorschubwalzen 29a, 29b und dem Einschieben des
nächsten Blattes B4 (etwa Zeitpunkt t15 ) zwischen diese
Walzen das Blatt B3 vollständig dem Sammelraum 26 des
Behälters 25 zugeführt werden muss, indem während einem
längeren, sich vom Zeitpunkt t11 bis zum Zeitpunkt t14
erstreckenden Interwall T4 das Vorschubwalzenpaar 29a,
29b in der entgegengesetzten Drehrichtung 30', 31' angetrieben wird. Somit wird durch die verzögerte Einschaltung des Antriebes der Abzugswalze 8 berücksichtigt, dass
im ausserordentlichen Fall einer erfolglosen Ablesung
eines Blattes mehr Zeit erforderlich ist, um dieses Blatt
in den getrennten Sammelraum für erfolglos abgelesene
Blätter zu transportieren.

Im Antriebsdiagramm der Fig. 4 ist angenommen, dass das nun vom Stapel 2 abgezogene Blatt B4 im Zeitpunkt t15 wiederum erfolgreich abgelesen wurde, so dass im Zeitpunkt t15 der Antrieb der Abzugswalze 8 unverzögert während des bis zum Zeitpunkt t17 dauernden Intervalles T1 eingeschaltet wird, um ein weiteres Blatt B5 vom Stapel abzuziehen. Ferner ist ersichtlich, dass im Intervall zwischen den Zeitpunkten t15 und t19 das erfolgreich abgelesene Blatt B4 durch den im Intervall T3 zwischen den Zeitpunkten t16 und t18 eingeschalteten Antrieb des Vorschubwalzenpaares 29a, 29b vollständig in den Sammelraum 24 für erfolgreich abgelesene Blätter gefordert wird.

Es ist somit einzusehen, dass im Normalfall erfolgreich abgelesener Blätter keine Verlängerung der Kadenz der Entnahme und Ablesung der Blätter in Kauf genommen werden muss, und dass eine angemessene Verzögerung nur relativ selten dann auftritt, wenn die Ablesung eines Blattes erfolglos war. Das folgerichtige Sammeln erfolgreich und erfolglos abgelesener Blätter in getrennten Sammelräumen wird somit automatisch ohne eine ins Gewicht fallende Verzögerung des normalen Ableseablaufes erzielt.

Der Umstand, dass bei der in Fig. 1 dargestellten Anlage der Behälter 25 mit dem Sammelraum 24 für erfolgreich abgelesene Blätter oder Belege nahezu in Linie
mit der vorangehenden, die Lesestelle 14 enthaltenden
Transportbahn angeordnet ist, ermöglicht nicht nur eine
kompakte Bauweise der ganzen Anlage, sondern erlaubt es
auch, relativ schmale Blätter oder Belege sicher zu
erfassen und im einen oder anderen Sammelraum 24, 26 abzulegen, weil sich, in Transportrichtung 7 (Fig. 2) gesehen,
das umsteuerbare Vorschubwalzenpaar 29a, 29b praktisch
in Linie mit der Bezugskante 13 (Fig. 1) befindet und somit der Randbereich auch eines schmalen Blattes oder
Beleges von diesem Walzenpaar sicher erfasst wird. Auch
kurze Blätter oder Belege gelangen zwischen die Walzen
des Vorschubwalzenpaares 29a, 29b, da dieses in der
Transportrichtung gesehen vor der Mitte des Behälters
25 (Fig. 1) liegt, d.h. da das Blattführungsteil 27 kürzer
ist als das nachfolgende Blattführungsteil 28.

In Fig. 3 ist das zwischen die beiden zusammenarbeitenden Vorschubwalzen 29a und 29b geschobene Blatt
32 dargestellt. Um zu verhindern, dass das Blatt 32 aus
dem durch die ebenen Flächen der Vorschubwalzen 29a, 29b
begrenzten Zwischenraum in den Sammelraum 24 des Behälters

- 18 -

23 rutscht, bevor die Vorschubwalzen 29a, 29b aufgrund des Ableseergebnisses in der einen oder anderen Drehrichtung betätigen werden, können einfache Haltemittel für das Blatt 32 vorgesehen werden, die in den Figuren nicht dargestellt sind, jedoch nachfolgend beispielsweise angeführt werden. Eine erste Massnahme kann darin bestehen, den Boden des Behälters 23 in der Höhe verschiebbar auszubilden und sein Niveau derart zu regeln, dass das oberste Blatt des im Behälter 23 gesammelten Stapels immer beinahe auf der Höhe des spaltförmigen Zwischenraumes der Vorschubwalzen 29a, 29b liegt, so dass dann das eingeschobene Blatt 32 auf dem gesammelten Stapel aufliegen kann. Einrichtungen solcher Art sind beispielsweise bei Maschinen bekannt, bei welche von einem Blätterstapel immer das oberste Blatt abgezogen wird.

Eine andere Massnahme zur Verhinderung des Herausrutschens des Blattes 32 aus dem Zwischenraum der Vorschubwalzen 29a, 29b kann darin bestehen, die ebene Fläche mindestens der einen Vorschubwalze mit einem Federelement, z.B. einer draht- oder blattförmigen Feder, zu versehen, das derart ausgebildet ist, dass das Blatt 32 zwischen das Federelement und die ebene Fläche der anderen Vorschubwalze einschiebbar ist.

Eine weitere Massnahme kann darin bestehen, oberhalb der Blattführungsteile 27 und 28 (Fig. 1, 2) ein Element anzuordnen, das das Blatt 32 leicht auf die Blattführungsteile 27, 28 drückt, jedoch eine ungehinderte Bewegung des Blattes 32 in den Förderrichtungen 22 (Fig. 2) und 33 bzw. 34 (Fig. 3) ermöglicht. Dies kann beispielsweise mittels einer in einem Lager nach allen Seiten drehbar gelagerten, federnd auf das Blattführungsteil 27 bzw. 28 abgestützten Kugel erzielt werden.

Im dargestellten Ausführungsbeispiel sind die Vorschuborgane 11a, 11b, 21a, 21b und 29a, 29b für die vom Stapel 2 abgezogenen Blätter als Walzenpaare ausgebildet. Es versteht sich, dass auch andere Vorschuborgane angeordnet werden können, beispielsweise Transportbänder. Anstelle des umsteuerbaren Vorschubwalzenpaares 29a, 29b kann auch eine Einrichtung vorgesehen werden, welche ein Schwenkorgan enthält, das eine als Saug- oder Haftfläche ausgebildete, auf das teilweise über den Sammelraum 24 des Behälters 23 geförderte Blatt 32 wirkende Fläche hat. Mittels einer kurzen Schwenkbewegung des Schwenkorgans in der einen oder anderen, durch die Pfeile 33 bzw. 34 in Fig. 3 angedeuteten Schwenkrichtung wird dann dem Blatt 32 ein Stoss versetzt, der es vollständig in den Sammelraum 24 oder in den Sammelraum 26 befördert.

Patentansprüche
-----------------------------------

1. Verfahren zur Blattförderung bei einer automatischen Leseeinrichtung, bei welchem ein einzeln abzulesendes Blatt einem Stapel entnommen, einer Lesestelle zugeführt und anschliessend vorerst nur teilweise in einen ersten Sammelraum für erfolgreich abgelesene Blätter eingeführt wird, worauf das teilweise eingeführte Blatt nach Vorliegen des Gutbefundes der Ablesung vollständig dem ersten Sammelraum zugeführt wird, hingegen bei Vorliegen eines Nicht-Gutbefundes durch eine entgegengesetzte Bewegung aus dem ersten Sammelraum für erfolgreich abgelesene Blätter wieder herausgezogen und vollständig einem getrennten zweiten Sammelraum für erfolglos abgelesene Blätter zugeführt wird, dadurch gekennzeichnet, dass das Blatt vom Stapel bis zu seiner teilweisen Einführung in den ersten Sammelraum längs einer mindestens angenähert geraden und ebenen Transportbahn gefördert wird und hierauf in der Ebene dieser Transportbahn quer zu deren Richtung vollständig dem ersten bzw. zweiten Sammelraum zugeführt wird.

2. Vorrichtung zur Ausführung des Verfahrens nach Anspruch 1, mit je einem Behälter für den ersten und zweiten Sammelraum und mit mehreren Vorschuborganen zur Zuführung der einzeln abzulesenden Blätter vom Stapel zur Lesestelle und zur teilweisen Einführung der abgelesenen Blätter in den ersten Sammelraum, sowie mit einem in Abhängigkeit vom Gutbefund bzw. Nicht-Gutbefund des Ableseergebnisses umsteuerbaren Vorschuborgan zur vollständigen Zuführung der Blätter in den ersten bzw. zweiten Sammelraum, dadurch gekennzeichnet, dass die auf die zu fördernden Blätter einwirkenden Flächen aller Vorschuborgane mindestens angenähert in der gleichen Ebene und entlang einer mindestens angenähert geraden Transportbahn liegen, und dass die Förderrichtungen des umsteuerbaren Vorschuborgans quer zur Förderrichtung der vorangehenden Vorschuborgane sind, wobei die Behälter mit dem ersten und zweiten Sammelraum auf der einen bzw. der anderen Förderseite des umsteuerbaren Vorschuborgans angeordnet sind.

3. Vorrichtung nach Anspruch 2, dadurch gekennzeichnet, dass der Behälter mit dem ersten Sammelraum für erfolgreich abgelesene Blätter angenähert auf die genannte Transportbahn ausgerichtet ist, und dass der Behälter mit dem zweiten Sammelraum für erfolglos abgelesene Blätter seitlich zur genannten Transportbahn unmittelbar anschliessend an den Behälter mit dem ersten Sammelraum angeordnet ist.

4. Vorrichtung nach Anspruch 3, bei welcher die Transportbahn zwischen dem Stapel und dem Behälter mit dem ersten Sammelraum mit einer Bezugskante für die geförderten Blätter versehen ist, dadurch gekennzeichnet, dass das umsteuerbare Vorschuborgan an der Stelle der aneinander grenzenden Sammelräume angeordnet ist und eine Wirkfläche für die ihm zugeführten Blätter hat, welche einwärts verschoben benachbart zur Linie der Bezugskante liegt, derart, dass das umsteuerbare Vorschuborgan die ihm zugeführten Blätter im Bereich derjenigen Blattränder erfasst, die an die Bezugskante anstossen.

5. Vorrichtung nach einem der Ansprüche 2 bis 4, dadurch gekennzeichnet, dass die Vorschuborgane walzenförmig sind.

6. Vorrichtung nach einem der Ansprüche 2 bis 4, dadurch gekennzeichnet, dass die Vorschuborgane als Transportbänder ausgebildet sind.

7. Vorrichtung nach einem der Ansprüche 2 bis 4, dadurch gekennzeichnet, dass das umsteuerbare Vorschuborgan ein mit einer Wirkfläche, z.B. einer Saug- oder Haftfläche, für das zu fördernde Blatt versehenes Schwenkorgan enthält.

8. Vorrichtung nach Anspruch 5, bei welcher das umsteuerbare Vorschuborgan als Vorschubwalzenpaar ausgebildet ist, dadurch gekennzeichnet, dass die Walzen des Vorschubwalzenpaares je eine sich über ihre ganze Länge erstreckende ebene Fläche aufweisen, wobei in der Ruhelage des Vorschubwalzenpaares die beiden ebenen Flächen einander gegenüberstehen und einen spaltförmigen Zwischenraum zur Aufnahme eines teilweise in den ersten Sammelraum für erfolgreich abgelesene Blätter geförderten Blattes bilden, und wobei im Drehzustand des Vorschubwalzenpaares die zylindrischen Flächen der Walzen das aufgenommene Blatt fördern und vollständig dem ersten oder zweiten Sammelraum zuführen.

9. Vorrichtung nach Anspruch 8, dadurch gekennzeichnet, dass Mittel zum Festhalten eines Blattes im spaltförmigen Zwischenraum der ebenen Flächen der Walzen des Vorschubwalzenpaares vorhanden sind.

10. Vorrichtung nach einem der Ansprüche 1 bis 9, mit einer Steuereinrichtung zur zeitlich bestimmten Steuerung von Antrieben der Vorschuborgane und mit einer der Lesestelle zugeordneten Auswerteeinrichtung zur Erzeugung eines den Gutbefund bzw. den Nicht-Gutbefund des Ableseergebnisses darstellenden Steuersignals, gekennzeichnet durch eine derartige Ausbildung der Steuereinrichtung und der Auswerteeinrichtung, dass jeweils dann, wenn ein Blatt die Lesestelle passiert hat und die Auswerteeinrichtung ein den Gutbefund darstellendes Signal erzeugt hat, ein weiteres Blatt unmittelbar darauffolgend vom Stapel abgezogen und der Lesestelle zugeführt wird, bzw. dann, wenn ein Blatt die Lesestelle passiert hat und die Auswerteeinrichtung ein den Nicht-Gutbefund darstellendes Signal erzeugt hat, ein weiteres Blatt mit einer zeitlichen Verzögerung vom Stapel abgezogen und der Lesestelle zugeführt wird, um die für die Zuführung des vorangehenden Blattes in den zweiten Sammelraum für erfolglos abgelesene Blätter benötigte längere Transportzeit zu berücksichtigen.

Fig.1

Fig.2

**Fig. 3**

**Fig. 4**

Europäisches
Patentamt

**EUROPÄISCHER RECHERCHENBERICHT**

0117379

Nummer der Anmeldung

EP 83 81 0624

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y,D | DE-B-2 734 371  (FELLER A.G.) | 1-5,9 | G 06 K  13/08 |
| | --- | | |
| Y | FR-A-1 413 253  (SIEMENS & HALSKE A.G.) <br> * Insgesamt * | 1-5,9 | |
| | --- | | |
| A | FR-A-2 278 410  (STAAT DER NEDERLANDEN P.T.T.) <br> * Figur 1; Seite 2, Zeile 23 - Seite 3, Zeile 10 * | 8 | |
| | ----- | | |

|  |
|---|
| RECHERCHIERTE SACHGEBIETE (Int. Cl. 3) |
| G 06 K <br> G 06 F <br> B 07 C |

Der vorliegende Recherchenbericht wurde für alle Patentansprüche erstellt.

| Recherchenort | Abschlußdatum der Recherche | Prüfer |
|---|---|---|
| DEN HAAG | 19-04-1984 | PESCHEL W. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1503. 03.82